Europäisches Patentamt

European Patent Office

Office européen des brevets

(11) Veröffentlichungsnummer: **0 499 650 B1**

## (12) EUROPÄISCHE PATENTSCHRIFT

(45) Veröffentlichungstag der Patentschrift: **24.08.94**

(51) Int. Cl.⁵: **C01B 25/10**

(21) Anmeldenummer: **91101844.8**

(22) Anmeldetag: **09.02.91**

(54) **Verfahren zur Stabilisierung von Phosphortrichlorid.**

(43) Veröffentlichungstag der Anmeldung:
**26.08.92 Patentblatt 92/35**

(45) Bekanntmachung des Hinweises auf die
Patenterteilung:
**24.08.94 Patentblatt 94/34**

(84) Benannte Vertragsstaaten:
**CH DE DK FR GB IT LI**

(56) Entgegenhaltungen:

**CHEMICAL ABSTRACTS, Band 90, Nr. 8, 19.
Februar 1979, Seite 144,Zusammenfassung
Nr. 57323v, Columbus, Ohio, US;& PL-A-85
068 (INSTYTUT CHEMII NIEORGANICZNEJ)
30-06-1976 (Kat. D,A)**

**ZEITSCHR. F. ANORGANISCHE U. ALLGEM.
CHEMIE, Band 451, Nr. 4, April 1979, Seiten
189-192; J. GALLUS-OLENDER et al.: "The purification of PCl3 from Pv by interaction with
active silica"**

(73) Patentinhaber: **CHEMIE GMBH BITTERFELD-
WOLFEN**
**Zörbiger Strasse**
**D-06749 Bitterfeld (DE)**

(72) Erfinder: **Schumann, Rudolf, Dr.**
**Wörlitzer Strasse 26**
**O-4409 Raguhn (DE)**

**Beschreibung**

Die Erfindung betrifft ein Verfahren zur Stabilisierung von Phosphortrichlorid.

Phosphortrichlorid wird technisch durch Reaktion von Phosphor mit Chlor hergestellt. Es enthält im allgemeinen weniger als 0,05 % Phosphoroxidchlorid, wenn es aus gereinigtem Chlor hergestellt oder bei Verwendung von ungereinigtem Chlor rektifiziert wird.

Phosphortrichlorid kann jedoch durch Sauerstoff oder Sauerstoff enthaltende Gase leicht zu Phosphoroxidchlorid oxydiert werden.

Bei der Lagerung, dem Transport und der Verwendung von Phosphortrichlorid ist ein langsamer, ständiger Anstieg des Phosphoroxidchlorid-gehaltes zu beobachten. Das Phosphoroxidchlorid mindert die Qualität des Phosphortrichlorides und führt bei der chemischen Weiterverarbeitung zwangsläufig zu unerwünschten Nebenprodukten und dadurch zu Ausbeute- und Qualitätsverlusten beim gewünschten Endprodukt. So gelangt zum Beispiel bei der Weiterverarbeitung zu Phosphorpentachlorid oder Phosphorsulfochlorid das Phosphoroxidchlorid vollständig in das Endprodukt. Eine nachträgliche Abtrennung ist aufgrund der physikalischen Eigenschaften im Verhältnis zur Abtrennung aus Phosphortrichlorid sehr viel schwieriger. Bei der Weiterverarbeitung zu phosphoriger Säure entsteht aus dem Phosphoroxidchlorid Phosphorsäure und bei der Umsetzung mit Alkoholen zu Phosphiten werden Phosphate als Nebenprodukt gebildet. Bei der Synthese von Tri-(2-Chlorethyl)-phosphit durch Reaktion mit Ethenoxid entsteht aus Phosphoroxidchlorid Tri-(2-Chlorethyl)-phosphat als störendes Nebenprodukt.

Bei der Synthese, Lagerung und dem Transport von Phosphortrichlorid ist daher darauf zu achten, daß unter weitgehendem Ausschluß von Luft oder anderen Sauerstoff enthaltenden Gasen gearbeitet wird.

Es ist bekannt (Chem. Techn. 33 (1981), Heft 4, S. 191), das Phosphortrichlorid unter einem minimalen Überdruck eines trockenen, sauerstoffarmen Inertgases zu lagern. In der Praxis werden auch die Synthese von Phosphortrichlorid und der Transport unter weitgehendem Ausschluß von Sauerstoff, gegebenenfalls unter Schutz eines inerten Gases, wie z. B. Stickstoff oder Kohlendioxid, durchgeführt.

Trotzdem kommt es jedoch vor allem bei längeren Transport- und Lagerzeiten zu einer deutlichen Einwirkung von Sauerstoff und zur Bildung von Phosphoroxidchlorid. So treten zum Beispiel beim Versand in Kesselwagen vorwiegend Konzentrationen zwischen 0,2 und 0,8 % Phosphoroxidchlorid auf.

Eine nachträgliche oder nochmalige destillative Reinigung kann aufgrund des hohen apparativen und energetischen Aufwandes nicht in Betracht gezogen werden.

Auch eine Verminderung und Stabilisierung des Phosphoroxidchlorid-Gehaltes durch Adsorptionsmittel wie zum Beispiel Silicagel (Gallus-Olender, I. und Franc, B.: Z. anorgan. allg. Chem. 451 (1979), S. 189 - 192 und PL-PS 85 068) ist wegen des hohen apparativen Aufwandes, der Kosten für das Adsorptionsmittel, der Produktverluste und der Entsorgung sehr nachteilig. So wird zum Beispiel für die Absenkung des $POCl_3$-Gehaltes von 0,78 auf 0,07 %, gerechnet als $H_3PO_4$, und die Stabilisierung des Phosphortrichlorides eine Kontaktzeit von 21 Tagen und 10 % Silicagel benötigt, bezogen auf die Phosphortrichloridmenge.

Ziel der Erfindung ist es, den technisch-ökonomischen Aufwand bei der Stabilisierung von Phosphortrichlorid zu verringern und Qualitätsverluste des Phosphortrichlorides während der Lagerung und dem Transport zu mindern.

Die Aufgabe der Erfindung besteht darin, ein Verfahren zur Stabilisierung von Phosphortrichlorid zu schaffen, bei dem die Bildung von Phosphoroxidchlorid im Phosphortrichlorid wesentlich verzögert und auf einen minimalen, die Weiterverarbeitung nicht mehr nachteilig beeinflußbaren Wert reduziert wird.

Erfindungsgemäß wird die Aufgabe dadurch gelöst, daß dem Phosphortrichlorid ein oder mehrere Amine, die mindestens zwei an einem Stickstoffatom gebundene aromatische Kohlenwasserstoffreste besitzen, zugesetzt werden. Als Amine kommen zum Beispiel folgende Verbindungen zur Anwendung:

Diphenylamin

Phenyl-4-methylphenylamin

Bis-(4-methylphenyl)-amin

2,6-Dichlor-diphenylamin

2-Chlor-2',4-dinitrodiphenylamin

N-Isopropyl-N'-phenyl-%-phenylendiamin

N,N'-Diphenyl-4-phenylendiamin

Phenothiazin

Phenyl-2-naphthylamin

Diphenyl-Methylamin

Diphenyl-Cyclohexylamin

Triphenylamin

Die Amine können auch in Form ihrer Salze, einschließlich ihrer quartären Ammoniumverbindungen, oder ihrer Reaktionsprodukte mit Phosphorhalogeniden zugesetzt werden.

Solche Verbindungen sind zum Beispiel:

Diphenylamin-hydrochlorid
Diphenylamin-hydrobromid
Diphenylamin-hydronitrat
Triphenylamin-hydrochlorid
Dimethyl-diphenyl-ammonium-jodid
Dimethyl-diphenyl-ammonium-methylsulfat
Diphenylamino-dibromphosphan
Diphenylamino-dichlorphosphan
Bis-(diphenylamino)-chlorphosphan

Die Amine können in gelöster oder dispergierter Form zugesetzt werden. Als Lösungsmittel werden zum Beispiel Chloroform oder Methyleuchlorid verwendet. Die Amine werden in einer Menge von $10^{-6}$ bis $10^{-1}$ %, bezogen auf die Phosphortrichloridmenge, zugesetzt. Es ist auch möglich, die Amine nur einer Teilmenge des Phosphortrichlorides zuzusetzen und diese Teilmenge anschließend mit der übrigen Menge an Phosphortrichlorid zu vermischen.

Die Menge des Stabilisierungsmittels ist abhängig von der beabsichtigten Wirkung, wie Stabilisierungsgrad und Stabilisierungszeit sowie des gewählten Amins.

Das Stabilisierungsmittel kann auch in situ gebildet oder umgewandelt werden. Beispielsweise können im Phosphortrichlorid aus Aminen Aminochlorphosphane und Aminhydrochloride entstehen.

Die Amine, die mindestens zwei an einem Stickstoffatom gebundene aromatische Kohlenwasserstoffreste besitzen, zeigen eine hervorragende stabilisierende Wirkung bei Phosphortrichlorid gegen Sauerstoff oder Sauerstoff enthaltende Gase. Die Bildung von Phosphoroxidchlorid im Phosphortrichlorid wird dadurch so stark verzögert und in ihrem Mengenanteil so reduziert, daß das Phosphortrichlorid auch nach einer Lagerung bzw. einem Transport von mehreren Wochen seine ursprüngliche Qualität nahe zu beibehält. Die chemische Weiterverarbeitung des Phosphortrichlorides kann somit problemlos erfolgen und führt zu keinen Ausbeuteverlusten oder Qualitätsminderungen an den herzustellenden Endprodukten .

Die Erfindung soll nachstehend an zwei Beispielen erläutert werden:

Beispiel 1

Jeweils 50 ml unter technischen Bedingungen frisch hergestelltes Phosphortrichlorid wurden unter trockenem, sauerstofffreiem Argon in 500 ml-Glaskolben eingefüllt, mit einem oder mehreren Aminen, die mindestens zwei an einem Stickstoffatom gebundene aromatische Kohlenwasserstoffreste besitzen, versetzt und gut durchgemischt. Im Anschluß wurde das Argon durch normale Raumluft ersetzt und die Probe bei Raumtemperatur gelagert. Unmittelbar vor Luftzutritt und nach 30 Tagen wurden Proben entnommen und infrarotspektroskopisch auf Phosphoroxidchlorid untersucht. Es wurden jeweils drei parallele Oxydationsversuche angesetzt und die Durchschnittswerte ermittelt.

Als Vergleich wurden von jeder Charge Phosphortrichlorid-Ausgangsprodukt drei Proben in der oben beschriebenen Weise ohne Zusatz eines Amins angesetzt und die Phosphoroxidchloridbildung untersucht. Die Ergebnisse sind in der nachfolgenden Tabelle angegeben.

| Zusatzstoff | Menge (mg) | Masseprozent Phosphoroxidchlorid | | |
|---|---|---|---|---|
| | | 1 | 2 | 3 |
| Diphenylamin | 1 | 0,03 | 1,6 | 0,05 |
| Phenyl-4-methylphenylamin | 1 | 0,03 | 1,6 | 0,14 |
| Bis-(4-methylphenyl)-amin | 1 | 0,03 | 1,6 | 0,13 |
| 2,6-Dichlor-diphenylamin | 1 | 0,03 | 1,6 | 0,05 |
| 2-Chlor-2',4-dinitrodiphenylamin | 10 | 0,03 | 1,2 | 0,11 |
| N-Isopropyl-N'-phenyl-4-phenylendiamin | 1 | 0,03 | 1,6 | 0,05 |
| Phenothiazin | 1 | 0,03 | 1,6 | 0,04 |
| Phenyl-2-naphthylamin | 10 | 0,03 | 1,6 | 0,04 |
| Phenyl-2-naphthylamin | 1 | 0,03 | 1,6 | 0,16 |
| Diphenyl-Methylamin | 1 | 0,02 | 1,6 | 0,04 |
| Diphenyl-Cyclohexylamin | 1 | 0,03 | 1,6 | 0,11 |
| Triphenylamin | 1 | 0,02 | 1,4 | 0,07 |
| Diphenylamin-hydrochlorid | 1 | 0,02 | 1,6 | 0,03 |
| Diphenylamin-hydrobromid | 1 | 0,03 | 1,6 | 0,05 |
| Diphenylamin-hydronitrat | 1 | 0,02 | 1,5 | 0,04 |
| Triphenylamin-hydrochlorid | 1 | 0,02 | 1,6 | 0,09 |
| Dimethyl-diphenyl-ammonium-jodid | 1 | 0,02 | 1,6 | 0,04 |
| Dimethyl-diphenyl-ammonium-methylsulfat | 1 | 0,02 | 1,6 | 0,05 |
| Diphenylamino-dibromphosphan | 1 | 0,03 | 1,6 | 0,07 |
| Diphenylamino-dichlorphosphan | 1 | 0,03 | 1,6 | 0,06 |

| | | | | |
|---|---|---|---|---|
| Bis-(diphenylamino)-chlorphosphan | 1 | 0,03 | 1,6 | 0,06 |
| Diphenylamin mit Triphenylamin je | 0,5 | 0,02 | 1,5 | 0,04 |
| Phenothiazin mit Dimethyl-diphenyl-ammonium-jodid je | 0,5 | 0,02 | 1,5 | 0,04 |
| Diphenylamin | 0,2[1] | 0,02 | 1,4 | 0,05 |
| Diphenylamin | 0,02[2] | 0,02 | 1,4 | 0,09 |
| Diphenylamin | 0,002[2] | 0,02 | 1,0[4] | 0,60[4] |
| Diphenylamin | 0,2[3] | 0,02 | 1,4 | 0,06 |
| Triphenylamin | 0,2[1] | 0,03 | 1,8 | 0,10 |

1 vor der Sauerstoffeinwirkung

2 nach der Sauerstoffeinwirkung ohne Zusatz

3 nach der Sauerstoffeinwirkung mit Zusatz

[1] gelöst in Chloroform; Konzentration: 10 mg/ml

[2] gelöst in Chloroform; Konzentration: 0,1 mg/ml

[3] gelöst in Methylenchlorid; Konzentration: 10 mg/ml

[4] nach 1 Tag

Beispiel 2

In einer mit Rückflußkühler und zur Gasverteilung mit Fritte ausgerüsteten Gaswaschflasche werden 100 ml Phosphortrichlorid mit einem Phosphoroxidchlorid-Gehalt von 0,03 % vorgelegt, mit dem Amin versetzt und innerhalb einer Stunde gleichmäßig mit 10 l Sauerstoffgas behandelt. Anschließend wird infrarotspektrometrisch auf Phosphoroxidchlorid geprüft. In der nachfolgenden Tabelle sind die erzielten Ergebnisse einer Probe ohne Zusatz gegenübergestellt.

| Zusatzstoff | Menge (mg) | Masseprozent Phosphoroxidchlorid |
|---|---|---|
| Diphenylamin | 5 | 0,88 |
| Diphenylamin | 50 | 0,18 |
| N,N'-Diphenyl-4-phenylendiamin | 5[5] | 1,45 |
| N,N'-Diphenyl-4-phenylendiamin | 50[5] | 0,78 |
| ohne | - | 20,40 |

[5] Zugabe erfolgte als Dispersion in Chloroform; Konzatration: 20 mg/ml

**Patentansprüche**

1. Verfahren zur Stabilisierung von Phosphortrichlorid, gekennzeichnet dadurch, daß dem Phosphortrichlorid ein oder mehrere Amine, die mindestens zwei an einem Stickstoffatom gebundene aromatische Kohlenwasserstoffreste besitzen, oder deren Salze oder ihrer Reaktionsprodukte mit Phosphorhalogeniden zugesetzt werden.

**2.** Verfahren nach den Ansprüchen 1, gekennzeichnet dadurch, daß die Amine in gelöster oder dispergierter Form zugesetzt werden.

**3.** Verfahren nach den Ansprüchen 1 und 2, gekennzeichnet dadurch, daß die Amine in einer Menge von $10^{-6}$ bis $10^{-1}$ %, bezogen auf die Phosphortrichloridmenge, zugesetzt werden.

**4.** Verfahren nach den Ansprüchen 1 bis 3, gekennzeichnet dadurch, daß die Amine nur einer Teilmenge des Phosphortrichlorids zugesetzt werden und diese Teilmenge anschließend mit der übrigen Menge an Phosphortrichlorid vermischt wird.

## Claims

**1.** Method of stabilizing of phosphor trichloride, wherein one or several amines having at least two aromatic hydrocarbon residues attached to a nitrogen atom, or their salts, or their reaction products with phosphor halogenides are added to phosphor trichloride.

**2.** Method of claim 1, wherein amines in dissolved or dispersed state are added.

**3.** Methode of claims 1 and 2, wherein amines with an amount of $10^{-6}$ to $10^{-1}$ % referring to the quantity of phosphor trichloride are added.

**4.** Method of claims 1 to 3, wherein amines are added to a partial amount of phosphor trichloride being mixed thereafter with the remaining part.

## Revendications

**1.** Procédé pour la stabilisation du trichlorure de phosphore, caractérisé du fait qu'on ajoute au trichlorure de phosphore une ou plusieurs amine(s) possédant au moins deux restes d'hydrocarbures aromatiques étant attachés à un atome d'azote, ou qu'on ajoute leurs sels ou leurs produits de réaction avec des halogénures de phosphore.

**2.** Procédé selon les prétentions 1, caractérisé du fait qu'on ajoute les amines soit en forme de solution, soit en forme dispersée.

**3.** Procédé selon les prétentions 1 et 2, caractérisé du fait qu'on ajoute les amines en une quantité de $10^{-6}$ à $10^{-1}$ %, par rapport à la quantité du trichlorure de phosphore.

**4.** Procédé selon les prétentions 1 à 3, caractérisé du fait qu'on n'ajoute les amines qu'à une quantité partielle prélevée du trichlorure de phosphore, et qu'on mélange enfin cette quantité partielle avec l'autre quantité du trichlorure de phosphore.